# EUROPEAN PATENT SPECIFICATION

(11) **EP 0 272 728 B1**
(45) Date of publication and mention of the grant of the patent: **07.04.1993**
(21) Application number: 87202329.6
(22) Date of filing: 24.11.1987
(51) Int. Cl.: C08G 67/02

(54) **Process for the preparation of polymers of C0 and olefinically unsaturated compounds**
Verfahren zur Herstellung von Polymeren aus C0 und olefinungesättigten Verbindungen
Prodédé de préparation de polymères de C0 aves des composés insaturés

(30) Priority: 01.12.1986 NL 8603062
(43) Date of publication of application: 29.06.1988
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL); Wife, Richard Lewin, NL-1031 CM Amsterdam (NL)

(56) References cited:
- EP-A- 121 965
- EP-A- 235 865
- EP-A- 0 229 408
- GB-A- 2 009 733

## Description

The invention relates to a process for the preparation of polymers of carbon monoxide with one or more olefinically unsaturated compounds.

High molecular weight linear polymers of carbon monoxide with one or more olefinically unsaturated compounds (for the sake of brevity referred to as A), in which the monomer units occur in alternating order and which polymers therefore consist of units of the general formula -CO-(A')-, wherein A' represents a monomer unit derived from a monomer A used, can be prepared by using catalyst compositions based upon
a) a palladium compound,
b) an anion of an acid with a pKa of less than 6, and
c) a bidentate ligand of the general formula R₁R₂M-R-MR₃R₄, wherein M represents phosphorus, arsenic or antimony, R₁-R₄ represent hydrocarbyl groups which may or may not be substituted with polar groups and R is a bivalent organic bridging group having at least two carbon atoms in the bridge.

Non pre-published EP-A-235 865 discloses the optional addition of 2,5-dihydroxy-3,6-dinitro-1,4-benzoquinone or mono-nitro-1,4-benzoquinone as element d).

An investigation conducted by the Applicant into these catalyst compositions has revealed that their activity for the polymerization of carbon monoxide with one or more olefinically unsaturated compounds can be much enhanced by incorporating as a compound d) a compound chosen from organic nitrites and nitro-compounds other than 2,5-dihydroxy-3,6-dinitro-1,4-benzoquinone and mono-nitro-1,4-benzoquinone. Catalyst compositions based upon the components a)-c) in which a component d) is taken up in addition, are novel.

The patent application relates to the use of the catalyst compositions based upon the components a)-d) in the preparation of polymers of carbon monoxide with one or more olefinically unsaturated compounds, as well as to the polymers thus prepared and to shaped objects consisting at least partly of these polymers.

The palladium compound used as component a) is preferably a palladium salt of a carboxylic acid and in particular palladium acetate.

As examples of acids with a pKa of less than 6 (determined in aqueous solution at 18 °C) whose anions should be present in the catalyst compositions as the components b) that may be mentioned include mineral acids, such as perchloric acid, sulphonic acid, phosphoric acid and nitrous acid, sulphonic acids, such as 2-hydroxy propane-2-sulphonic acid, paratoluenesulphonic acid, methane sulphonic acid and trifluoromethane sulphonic acid and carboxylic acids, such as trifluoroacetic acid, trichloroacetic acid, dichloroacetic acid, difluoro acetic acid, tartaric acid and 2,5-dihydroxy benzoic acid. Preferably the catalyst composition comprises an anion of an acid with a pKa of less than 2 and in particular an anion of a sulphonic acid, such as para-toluenesulphonic acid, or an anion of a carboxylic acid, such as trifluoro acetic acid, as the component b). In the catalyst compositions component b) is preferably present in a quantity of from 0.5 to 200 and in particular of from 1.0 to 100, equivalents per gram atom of palladium. Component b) may be included in the catalyst composition in the form of an acid or in the form of a salt. Eligible salts include non-noble transition metal salts, such as copper, zirconium and vanadium salts and main group metal salts, such as aluminium salts. Component b) is preferably taken up in the catalyst compositions in the form of an acid or a copper salt.

In the bidentate ligand used in the catalyst compositions as the component c), M is preferably phosphorus. Further, preference is given to bidentate ligands in which R₁-R₄ are aryl groups which may not be substituted with polar groups and in particular to such bidentate ligands in which at least one of the aryl groups has at least one polar substituent in a position ortho or para to M. Preference is further given to bidentate ligands in which the polar substituent which may be present in the groups R₁-R₄ are alkoxy groups and in particular methoxy groups. Finally, preference is given to bidentate ligands in which the groups R₁-R₄ are similar to one another and in which the bivalent organic bridging group R contains three carbon atoms in the bridge. Examples of suitable phosphorus bidentate ligands are
1,3-bis(diphenyl-phosphino)propane,
1,3-bis[di(4-methyl-phenyl)phosphino]propane,
1,3-bis[di(4-methoxy-phenyl)phosphino]propane
1,3-bis[di(2-methoxy-phenyl)phosphino]propane,
1,3-bis[di(2,4-dimethoxy-phenyl)phosphino]propane,
1,3-bis[di(2,6-dimethoxy-phenyl)phosphino]propane, and
1,3-bis[di(2,4,6-trimethoxy-phenyl)phosphino]propane.

The bidentate ligands are preferably used in the catalyst compositions in a quantity of 0.1-3 and in particular of 0.75-2, mol per mol of palladium compound.

Eligible components d) are organic nitrites and nitro-compounds. Examples of suitable organic nitrites are methyl nitrite, ethyl nitrite, propyl nitrite and butyl nitrite. Both nitro-alkanes and nitro-aromatics are nitro-compounds that can be used. Examples of suitable nitro-alkanes are nitro-methane, nitro-ethane, 1-nitro-propane and 2-nitro propane. Good results have been obtained by using catalyst compositions comprising butyl nitrite or 1-nitro-propane as the component d).

In the catalyst compositions the preferred component d) included is a nitro-aromatic. Eligible nitro-aromatics are both nitro-benzenes which may or may not be substituted and nitro-naphthales which may or may not be substituted, such as 1-nitro-naphthalene and 2-nitro-naphthalene. Preference is given to nitro-benzene and substituted nitro-benzenes. The substituted nitro-benzenes which are suitable for use as components d) may have one, two or three substituents.

Examples of nitro-benzenes having one substituent are halogen-substituted nitro-benzenes, such as 2-chloro-, 3-chloro-, 4-chloro-, 3-bromo- and 4-fluoro-nitro benzene, alkyl-substituted nitro-benzenes, such as 4-methyl-nitro benzene and 4-isopropyl-nitro benzene, hydroxy-substituted nitro benzenes, such as 4-hydroxy-nitro benzene, alkoxy-substituted nitro-benzenes, such as 4-methoxy-nitro benzene, halogen-alkyl-substituted nitro-benzenes, such as 2-(trifluoromethyl)-nitro benzene, 3-(trifluoromethyl)-nitro benzene and 4-(trifluoromethyl)-nitro benzene, cyano-substituted nitro-benzenes, such as 4-cyano-nitro benzene, alkoxy-carbonyl-substituted nitro-benzenes, such as 4-methoxy-carbonyl-nitro benzene and nitro-substituted nitro-benzenes, such as 1,3-dinitro benzene. Good results have been obtained by using catalyst compositions comprising 4-isopropyl-nitro benzene or 3-(trifluoromethyl)-nitro benzene as the component d).

Examples of nitro-benzenes having two substituents are halogen-disubstituted nitro-benzenes, such as 3,4-dichloro-, 2,6-dichloro, 2,6-difluoro- and 2-fluoro-4-chloro-nitro benzene, halogen/alkyl-disubstituted nitro-benzenes, such as 2-chloro-3-methyl-nitro-benzenes, 3-chloro-4-methyl-nitro benzene and 2-chloro-4-isopropyl-nitro benzene, halogen/cyano-disubstituted nitro-benzenes, such as 2-chloro-3-cyano-nitro benzene, halogen/alkoxy-disubstituted nitro-benzenes, such as 2-chloro-4-methoxy-nitro benzene, alkyl/nitro-disubstituted nitro-benzenes, such as 4-methyl-1,3-dinitro benzene and halogen/halogen-alkyl-disubstituted nitro-benzenes, such as 3-chloro-4-(trifluoromethyl)-nitro benzene. Good results have been obtained by using catalyst compositions comprising as the component d) 3,4-dichloro-nitro benzene, 3-chloro-4-methyl-nitro benzene or 4-methyl-1,3-dinitro benzene.

Examples of nitro-benzenes having three substituents are halogen-trisubstituted nitro-benzenes, such as 2,4,6-trichloro-nitro benzene and 2,4,6-trifluoro-nitro benzene and halogen/alkyl-trisubstituted nitro-benzenes such as 2,6-dichloro-4-methyl-nitro benzene.

Component d) is preferably used in the catalyst compositions in a quantity of 1-10 000 and in particular 1-5000 mol per gram atom of palladium.

The polymerization using the catalyst compositions of the invention can be carried out either in the liquid phase or in the gas phase,

Eligible olefinically unsaturated compounds which can be polymerized with carbon monoxide with the aid of the catalyst compositions of the invention are both compounds consisting exclusively of carbon and hydrogen, and compounds which, in addition to carbon and hydrogen, comprise one or more hetero-atoms, such as oxygen, nitrogen or phosphorus atoms. The catalyst compositions are preferably used for preparing polymers of carbon monoxide with one or more α-olefinically unsaturated hydrocarbons. Examples of suitable hydrocarbon monomers are ethane and other α-olefins, such as propane, butene-1, hexene-1 and octene-1, as well as styrene and alkyl-substituted styrenes, such as para-methyl styrene and para-ethyl styrene. The catalyst composition of the invention are especially suited for use in the preparation of copolymers of carbon monoxide with ethene and in the preparation of terpolymers of carbon monoxide with ethene and a further -olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain 10⁻⁷-10⁻³ and in particular 10⁻⁶-10⁻⁴ gram atom of palladium.

The preparation of the polymers is preferably conducted at a temperature of 20-200 °C and a pressure of 1-200 bar and in particular at a temperature of 30-150 °C and a pressure of 20-100 bar. In the mixture to be polymerized, the molar ratio of the olefinically unsaturated compounds relative to carbon monoxide is preferably 10:1-1:5 and in particular 5:1-1:2.

The invention is now illustrated with the aid of the following Examples.

### Example 1

A carbon monoxide/ethene copolymer was prepared as follows. A stirred autoclave of 300 ml capacity was charged with a catalyst solution comprising
50 ml of methanol,
0.1 mmol of palladium acetate,
0.5 mmol of copper para-tosylate and
0.15 mmol of 1,3-bis(diphenyl-phosphino)propane.

After the removal by evacuation of air present in the autoclave, ethene was introduced at 25 °C until a pressure of 30 bar was reached, followed by carbon monoxide until a pressure of 60 bar was reached. After 3 hours the polymerization was terminated by releasing the pressure. The polymer formed was filtered off, washed with methanol and dried in vacuo at room temperature.

5.8 g of Copolymer was obtained. Thus, the polymerization rate was 190 g of copolymer/g palladium/hour.

### Example 2

A carbon monoxide/ethene copolymer was prepared substantially in the same way as the copolymer of Example 1, except for the following differences
a) a catalyst solution was used which comprised 1 mmol of para-toluenesulphonic acid instead of 0.5 mmol of copper para-tosylate and
b) the reaction time was 2 hours instead of 3 hours.

4 g of Copolymer was obtained. Thus the polymerization rate was 200 g of copolymer/g palladium/hour.

### Example 3

A carbon monoxide/ethene copolymer was prepared substantially in the same way as the copolymer of Example 1, the difference being that a catalyst solution was used which comprised 0.5 mmol of vanadyl sulphate instead of 0.5 mmol of copper para-tosylate.

1.2 g of Copolymer was obtained. Thus , the polymerization rate was 40 g of copolymer/g palladium/hour.

### Example 4

A carbon monoxide/ethene copolymer was prepared substantially in the same way as the copolymer of Example 1, the difference being that a catalyst solution was used which comprised 0.5 mmol of zirconium sulphate instead of 0.5 mmol of copper para-tosylate.

1.7 g of Copolymer was obtained Thus, the polymerization rate was 65 g of copolymer/g palladium/hour.

### Example 5

A carbon monoxide/ethene copolymer was prepared substantially in the same way as the copolymer of Example 1, the difference being that a catalyst solution was used which comprised 0.5 mmol of aluminium sulphate instead of 0.5 mmol of copper para-tosylate.

1.1 g of Copolymer was obtained. Thus, the polymerization rate was 45 g of copolymer/g palladium/hour.

### Example 6

A carbon monoxide/ethene copolymer was prepared as follows. A catalyst was prepared by absorbing a catalyst solution comprising 2 ml of of methanol.
0.0189 mmol of palladium acetate
0.0374 mmol of para-toluenesulphonic acid and
0.0198 mmol of 1,3-bis(diphenyl-phosphino)propane
on 5 g of an alternating carbon monoxide/ethene copolymer. The catalyst thus prepared was charged to a stirred autoclave of 300 ml capacity. The air present in the autoclave was removed by pressurizing the autoclave with carbon monoxide to a pressure of 50 bar and then releasing the pressure, and repeating this procedure twice over. A 1:1 carbon monoxide/ethene mixture was introduced into the autoclave with pressure and meanwhile the contents of the autoclave were heated until a temperature of 86 °C and a pressure of 55 bar were reached. A pressure of 55 bar was maintained throughout the polimerization by the appropriate addition of a 1:1 carbon monoxide/ethene mixture. After 2.5 hours the polymerization was terminated by cooling to room temperature and releasing the pressure. The copolymer was dried over 16 hours at 50 °C.

In this experiment the polymerization rate was 3400 g of copolymer/g palladium/hour.

### Example 7

A carbon monoxide/ethene copolymer was prepared substantially in the same way as the copolymer of Example 6, except for the following differences
a) a catalyst solution was used which comprised
   2 ml of methanol,
   0.0190 mmol of palladium acetate,
   0.0390 mmol of para-toluenesulphonic acid and
   0.0220 mmol of 1,3-bis[di(2-methoxy-phenyl)phosphino]propane,
b) the reaction temperature was 95 °C instead of 86 °C, and
c) the reaction time was 2 hours instead of 2.5 hours.

In this experiment the polymerization rate was 2900 g of copolymer/g/palladium/hour.

### Example 8

A carbon monoxide/ethene copolymer was prepared substantially in the same way as the copolymer of Example 1, the difference being that a catalyst solution was used which in addition comprised 10 mmol of nitro-benzene.

7.1 g of Copolymer was obtained. Thus, the polymerization rate was 235 g of copolymer/g palladium/hour.

### Example 9

A carbon monoxide/ethene copolymer was prepared substantially in the same way as the copolymer of Example 1, the difference being that a catalyst solution was used which in addition comprised 50 mmol of nitro-benzene.

7.3 g of Copolymer was obtained. Thus, the polymerization rate was 245 g of copolymer/g palladium/hour.

### Example 10

A carbon monoxide/ethene copolymer was prepared substantially in the same way as the copolymer of Example 1, except for the following differences
a) a catalyst solution was used which in addition comprised
   10 mmol of 3-chloro-4-methyl-nitro benzene and
b) the reaction time was 1.5 hour instead of 3 hours.

4.3 g of Copolymer was obtained. Thus the polymerization rate was 285 g of copolymer/g palladium/hour.

### Example 11

A carbon monoxide/ethene copolymer was prepared substantially in the same way as the copolymer of Example 1, except for the following differences
a) a catalyst solution was used which in addition comprised
   1 ml of butyl nitrite, and
b) the reaction time was 2 hours instead of 3 hours.

4.4 g of Copolymer was obtained. Thus the polymerization rate was 220 g of copolymer/g palladium/hour.

### Example 12

A carbon monoxide/ether copolymer was prepared substantially in the same way as the copolymer of Example 1, except for the following differences
a) a catalyst solution was used which in addition comprised
   10 mmol of 3,4-dichloro-nitro benzene, and
b) the reaction time was 2 hours instead of 3 hours.

4.4 g of Copolymer was obtained. Thus the polymerization rate was 220 g of copolymer/g palladium/hour.

### Example 13

A carbon monoxide/ethene copolymer was prepared substantially in the same way as the copolymer of Example 1, except for the following differences
a) a catalyst solution was used which in addition comprised
   10 mmol of 3-(trifluoromethyl)-nitro benzene, and
b) the reaction time was 2 hours instead of 3 hours.

5.4 g of Copolymer was obtained. Thus the polymerization rate was 270 g of copolymer/g palladium/hour.

### Example 14

A carbon monoxide/ethene copolymer was prepared substantially in the same way as the copolymer of Example 1, except for the following differences
a) a catalyst solution was used which in addition comprised
   10 mmol of 4-methyl-1,3-dinitro benzene, and
b) the reaction time was 1.5 hour instead of 3 hours.

4.4 g of Copolymer was obtained. Thus the polymerization rate was 295 g of copolymer/g palladium/hour.

### Example 15

A carbon monoxide/ethene copolymer was prepared substantially in the same way as the copolymer of Example 1, except for the following differences
a) a catalyst solution was used which in addition comprised 10 mmol of 1-nitro-propane, and
b) the reaction time was 1.5 hour instead of 3 hours.

3.6 g of Copolymer was obtained. Thus the polymerization rate was 250 g of copolymer/g palladium/hour.

### Example 16

A carbon monoxide/ethene copolymer was prepared substantially in the same way as the copolymer of Example 1, except for the following differences
a) a catalyst solution was used which comprised 1 mmol of para-toluenesulphonic acid instead of 0.5 mmol of copper para-tosylate and, in addition, 10 mmol of 4-isopropyl-nitro benzene, and
b) the reaction time was 1 hour instead of 3 hours.

2.7 g of Copolymer was obtained. Thus the polymerization rate was 270 g of copolymer/g palladium/hour.

### Example 17

A carbon monoxide/ethene copolymer was prepared substantially in the same way as the copolymer of Example 1, except for the following differences
a) a catalyst solution was used which comprised 5 mmol of vanadyl sulphate instead of 0.5 mmol of copper para-tosylate and, in addition, 10 mmol of 4-methyl-1,3-dinitro benzene, and
b) the reaction time was 1,5 hour instead of 3 hours.

3.4 g of Copolymer was obtained. Thus the polymerization rate was 225 g of copolymer/g palladium/hour.

### Example 18

A carbon monoxide/ethene copolymer was prepared substantially in the same way as the copolymer of Example 1, except for the following differences
a) a catalyst solution was used which comprised
   0.5 mmol of zirconium sulphate instead of
   0.5 mmol of copper para-tosylate and, in addition,
   10 mmol of 4-isopropyl-nitro benzene, and
b) the reaction time was 2 hours instead of 3 hours.

3 g of Copolymer was obtained. Thus the polymerization rate was 150 g of copolymer/g palladium/hour.

### Example 19

A carbon monoxide/ethene copolymer was prepared substantially in the same way as the copolymer of Example 1, the difference being that a catalyst solution was used which comprised
0.5 mmol of aluminium sulphate instead of
0.5 mmol of copper para-tosylate and, in addition,
10 mmol of 4-methyl-1,3-dinitro benzene.

3 g of Copolymer was obtained. Thus the polymerization rate was 100 g of copolymer/g palladium/hour.

### Example 20

A carbon monoxide/ethene copolymer was prepared substantially in the same way as the copolymer of Example 6, except for the following differences
a) a catalyst solution was used which in addition comprised
   9.8 mmol of nitro-benzene,
b) the reaction temperature was 85 °C instead of 86 °C.
c) the reaction time was 2 hours instead of 2.5 hours.
In this experiment the polymerization rate was 5900 g of copolymer/g palladium/hour.

### Example 21

A carbon monoxide/ethene copolymer was prepared substantially in the same way as the copolymer of Example 6, except for the following differences
a) a catalyst solution was used which comprised
   2 ml of methanol,
   0.0190 mmol of palladium acetate,
   0.0390 mmol of para-toluenesulphonic acid,
   0.0220 mmol of 1,3-bis[di(2-methoxy-phenyl)phosphino] propane, and
   9.8 mmol of nitro-benzene,
b) the reaction temperature was 95 °C instead of 86 °C, and
c) the reaction time was 1.2 hours instead of 2.5 hours.
In this experiment the polymerization rate was 7700 g of copolymer/g palladium/hour.

Of Example 1-21, Examples 8-21 are examples according to the invention. These examples were carried out using catalyst compositions according to the invention, in which a compound chosen from the group formed an alkyl nitrites, nitro-alkanes and nitro-aromatics was taken up as the component d). Examples 1-7, using catalyst compositions in which such a compound did not occur, fall outside the scope of the invention. They have been included in the patent application for comparison. Of Example 1-21, Example 1-5 and 8-19 were carried out in the liquid phase and Examples 6,7,20 and 21 in the gaseons phase.

The favourable effect which the presence in the catalyst compositions of aromatic nitro-compounds as the fourth components has on the polymerization rate, becomes apparent on comparison of the results of the following examples.

For nitro-benzene: Examples 8 and 9 with Example 1; Example 20 with Example 6; Example 21 with Example 7.

For 4-methyl-1,3-dinitro benzene: Example 14 with Example 1; Example 17 with Example 3; Example 19 with Example 5.

For 4-isopropyl-nitro benzene: Example 16 with Example 2; Example 18 with Example 4.

For 3-chloro-4-methyl-nitro benzene: Example 10 with Example 1.

For 3,4-dichloro-nitro benzene: Example 12 with Example 1.

For 3-(trifluoro-methyl)-nitro benzene: Example 13 with Example 1.

The favourable effect which the presence of an alkyl nitrite or nitro-alkane as the fourth component in the catalyst composition has on the polymerization rate becomes apparent on comparison of the following example:
For butyl nitrite: Example 11 with Example 1.

For 1-nitro-propane: Example 15 with Example 1.

With the aid of ¹³CNMR analysis it was established that the carbon monoxide/ethene copolymers prepared according to Examples 1-21 had a linear alternating structure and thus consisted of units of the formula -CO-(C₂H₄)-. The copolymers had a melting point of 257 °C.

## Claims

1. Process for the preparation of polymers, characterized in that a mixture of carbon monoxide and one or more olefinically unsaturated compounds is polymerized by using a catalyst composition, comprising
a) a palladium compound,
b) an anion of an acid with a pKa of less than 6,
c) a bidentate ligand of the general formula R₁R₂M-R-MR₃R₄, wherein M represents phosphorus, arsenic or antimony, R₁,R₂,R₃ and R₄ represent hydrocarbyl groups which may or may not be substituted with polar groups and R is a bivalent organic bridging group having at least two carbon atoms in the bridge, and
d) a compound chosen from the group formed by organic nitrites and nitro-compounds, with the exception of 2,5-dihydroxy-3,6-dinitrol-1,4-benzoquinone and mono-nitro-1,4-benzoquinone.

2. Process as claimed in claim 1, characterized in that the catalyst composition is based upon an anion of an acid with a pKa of less than 2 as the component b).

3. Process as claimed in one or more of claims 1 or 2, characterized in that the catalyst composition comprises a component c) in which M is phosphorus and in which R₁, R₂, R₃ and R₄ represent aryl groups which may or may not be substituted with polar groups.

4. Process as claimed in any one of claims 1 to 3, characterized in that the catalyst composition comprises a component c) in which at least one of the aryl groups has at least one alkoxy group substituent in a position ortho or para to M.

5. Process as claimed in one or more of claims 1-4, characterized in that the catalyst composition comprises an alkyl nitrite, such as butyl nitrite, as the component d).

6. Process as claimed in one or more of claims 1-4, characterized in that the catalyst composition comprises a nitro-alkane, such as 1-nitro-propane, as the component d).

7. Process as claimed in one or more of claims 1-4, characterized in that the catalyst composition comprises nitro-benzene or a substituted nitro-benzene as the component d).

8. Process as claimed in any one of claims 1 to 4, characterized in that the catalyst composition comprises a substituted nitro-benzene, chosen from the group formed by 3-chloro-4-methyl-nitro benzene, 3,4-dichloro-nitro-benzene, 3-(trifluoro-methyl)-nitro-benzene, 4-isopropyl-nitro-benzene and 4-methyl-1,3-dinitro-benzene, as the component d).

9. Process as claimed in one or more of claims 1-8, characterized in that component d) is present in the catalyst composition in a quantity of 1-5000 mol per gram atom of palladium.

## Patentansprüche

1. Verfahren zur Herstellung von Polymeren,
dadurch gekennzeichnet,
daß eine Mischung aus Kohlenmonoxid und einer oder mehreren olefinisch ungesättigten Verbindung(en) unter Verwendung einer Katalysatorzusammensetzung polymerisiert wird, welche die folgenden Komponenten umfaßt:
a) eine Palladiumverbindung,
b) ein Anion einer Säure mit einem pKa-Wert von weniger als 6,
c) einen zweizähnigen Liganden der allgemeinen Formel R₁R₂M-R-MR₃R₄, in welcher M Phosphor, Arsen oder Antimon bedeutet, R₁, R₂, R₃ und R₄ gegebenenfalls mit polaren Gruppen substituierte Kohlenwasserstoffgruppen darstellen, und R eine zweiwertige organische Brückengruppe mit mindestens zwei Kohlenstoffatomen in der Brücke ist, und
d) eine Verbindung, welche ausgewählt ist aus der von organischen Nitriten und Nitroverbindungen gebildeten Gruppe, ausgenommen 2,5-Dihydroxy-3,6-dinitro-1,4-benzochinon und Mono-nitro-1,4-benzochinon.

2. Verfahren, wie in Anspruch 1 beansprucht,
dadurch gekennzeichnet,
daß die Katalysatorzusammensetzung bezüglich der Komponente d) auf einem Anion einer Säure mit einem pKa-Wert von weniger als 2 basiert.

3. Verfahren, wie in irgendeinem der Ansprüche 1 oder 2 beansprucht ist,
dadurch gekennzeichnet,
daß die Katalysatorzusammensetzung eine Komponente c) umfaßt, in welcher M Phosphor bedeutet und in welcher R₁, R₂, R₃ und R₄ gegebenenfalls mit polaren Gruppen substituierte Arylgruppen darstellen.

4. Verfahren, wie in irgendeinem der Ansprüche 1 bis 3 beansprucht,
dadurch gekennzeichnet,
daß die Katalysatorzusammensetzung eine Komponente c) umfaßt, in welcher mindestens eine der Arylgruppen mindestens eine Alkoxygruppe als Substituent in ortho- oder para-Stellung zu M aufweist.

5. Verfahren, wie in einem oder mehreren der Ansprüche 1 bis 4 beansprucht,
dadurch gekennzeichnet,
daß die Katalysatorzussmmensetzung als Komponente d) ein Alkylnitrit, wie Butylnitrit, enthält.

6. Verfahren, wie in einem oder mehreren der Ansprüche 1 bis 4 beansprucht,
dadurch gekennzeichnet,
daß die Katalysatorzusammensetzung als Komponente d) ein Nitroalkan, wie 1-Nitropropan, enthält.

7. Verfahren, wie in einem oder mehreren der Ansprüche 1 bis 4 beansprucht,
dadurch gekennzeichnet,
daß die Katalysatorzusammensetzung als Komponente d) Nitrobenzol oder ein substituiertes Nitrobenzol enthält.

8. Verfahren, wie in einem oder mehreren der Ansprüche 1 bis 4 beansprucht,
dadurch gekennzeichnet,
daß die Katalysatorzusammensetzung als Komponente d) ein substituiertes Nitrobenzol enthält, welches aus der Gruppe ausgewählt ist, welche durch 3-Chlor-4-methyl-nitrobenzol, 3,4-Dichlor-nitrobenzol, 3-(Trifluor-methyl)-nitrobenzol, 4-Isopropyl-nitrobenzol und 4-Methyl-1,3-dinitrobenzol gebildet wird.

9. Verfahren, wie in einem oder mehreren der Ansprüche 1 bis 8 beansprucht wird,
dadurch gekennzeichnet,
daß die Komponente d) in der Katalysatorzusammensetzung in einer Menge von 1 bis 5000 Mol je Grammatom Palladium enthalten ist.

## Revendications

1. Procédé de préparation de polymères, caractérisé en ce qu'on polymérise un mélange de monoxyde de carbone et d'un ou plusieurs composés oléfiniquement insaturés en utilisant une composition de catalyseur comprenant
a) un composé de palladium,
b) un anion d'un acide ayant un pKa inférieur à 6,
c) un coordinat bidenté de formule générale R₁R₂M-R-MR₃R₄, dans laquelle M représente le phosphore, l'arsenic ou l'antimoine, R₁, R₂, R₃ et R₄ représentent les groupes hydrocarbyles qui peuvent ou non être substitués par des groupes polaires et R est un groupe de pontage organique bivalent ayant au moins deux atomes de carbone dans le pont, et
d) un composé choisi dans le groupe formé par les nitrites organiques et les composés nitro, à l'exception de la 2,5-dihydroxy-3,6-dinitro-1,4-benzoquinone et de la mono-nitro-1,4-benzoquinone.

2. Procédé selon la revendication 1, caractérisé en ce que la composition de catalyseur est à base d'un anion d'un acide ayant un pKa inférieur à 2 comme composant b).

3. Procédé selon une ou plusieurs des revendications 1 ou 2, caractérisé en ce que la composition de catalyseur comprend un composant c) dans lequel M est le phosphore et où R₁, R₂, R₃ et R₄ représentent les groupes aryles qui peuvent ou non être substitués par des groupes polaires.

4. Procédé selon l'une quelconque des revendications 1 à 3, caractérisé en ce que la composition de catalyseur comprend un composant c) dans lequel au moins un des groupes aryles a au moins un substituant groupe alcoxy en position ortho ou para par rapport à M.

5. Procédé selon une ou plusieurs des revendications 1-4, caractérisé en ce que la composition de catalyseur comprend un nitrite d'alcoyle, comme le nitrite de butyle, comme composant d).

6. Procédé selon une ou plusieurs des revendications 1-4, caractérisé en ce que la composition de catalyseur comprend un nitroalcane comme le nitropropane, comme composant d).

7. Procédé selon une ou plusieurs des revendications 1-4, caractérisé en ce que la composition catalyseur comprend le nitrobenzène ou un nitrobenzène substitué comme composant d).

8. Procédé selon l'une quelconque des revendications 1 à 4, caractérisé en ce que la composition de catalyseur comprend un nitrobenzène substitué choisi dans le groupe formé par le 3-chloro-4-méthyl-nitrobenzène, le 3,4-dichloro-nitrobenzène, le 3-(trifluorométhyl)-nitrobenzène, le 4-isopropyl-nitrobenzène et le 4-méthyl-1,3-dinitrobenzène, comme composant d).

9. Procédé selon une ou plusieurs des revendications 1-8, caractérisé en ce que le composant d) est présent dans la composition de catalyseur en une quantité de 1-5 000 mole par atome-gramme de palladium.
